(19) Europäisches Patentamt
European Patent Office
Office européen des brevets

(11) **EP 4 195 168 A1**

(12) **EUROPEAN PATENT APPLICATION**

(43) Date of publication:
**14.06.2023 Bulletin 2023/24**

(21) Application number: **21212718.7**

(22) Date of filing: **07.12.2021**

(51) International Patent Classification (IPC):
***G06V 40/20*** *(2022.01)*     ***G06V 20/52*** *(2022.01)*

(52) Cooperative Patent Classification (CPC):
**G06V 40/20;** G06T 7/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **HIWALE, Sujitkumar**
**Eindhoven (NL)**
• **VAJINEPALLI, Pallavi**
**Eindhoven (NL)**
• **CHAKRABARTI, Biswaroop**
**Eindhoven (NL)**
• **BERA, Deep**
**Eindhoven (NL)**
• **KATIPALLY, Karthik Raj**
**Eindhoven (NL)**

(74) Representative: **Philips Intellectual Property & Standards**
**High Tech Campus 52**
**5656 AG Eindhoven (NL)**

(54) **A SYSTEM AND METHOD FOR DETECTING SURFACE CONTAMINATION**

(57)     A system is provided for detecting surface contamination. A set of cameras monitors a volume and the camera images are processed to identify the presence of one or more people in the volume and identify sneezing or coughing of the identified people. An orientation of the face of a person during the sneezing or coughing is determined so that a trajectory of particles during sneezing or coughing can be estimated. A distance between the face of the person and structures in the volume is also determined during the sneezing or coughing and a level of contamination of the structures can then be derived.

FIG. 1

EP 4 195 168 A1

**Description**

FIELD OF THE INVENTION

The invention relates to monitoring contamination of surfaces or objects, in particular caused by coughing or sneezing.

BACKGROUND OF THE INVENTION

The act of sneezing or coughing can discharge a large number of airborne particles in the external environment. Such particles are mixed with secretions from the respiratory tract. As many pathogens are harbored in respiratory tract secretions, sneezing or coughing can spread infections from one person to another.

The characteristics of human coughs and sneezes have been extensively studied using various experimental methods, including particle image velocimetry (PIV) and Schlieren imaging. A typical cough has a peak velocity in a range of 6-22 m/s with a duration ranging from 0.25 s to 0.8 s. The coughed particles have a wide range of sizes, with different transport characteristics. It has been observed that the average number of particles expelled by each cough ranges from 900 to over 300,000. It is also observed that a turbulent gas cloud with pathogen laden droplets can travel up to 8 meters away from the subject. As a consequence of these properties, sneezing or coughing could be a major contributor to transmission of respiratory infections in a general population.

Sneezing or coughing activities can be problematic inside a public space or hospital due to a high concentration of infected and susceptible individuals. One way to deal with this is repeated disinfection of entire premises; however, it is not always practically possible. Moreover, as not every sneeze or cough is infectious, it is a waste of resources and time to disinfect entire premises every time. In such places, it would be desirable to know which areas and surfaces are contaminated by a sneeze or cough so that they can be selectively and adequately disinfected.

In public space or hospital building, there is no way to know which surfaces have been contaminated by sneezing or coughing. The existing methods for cough or sneeze visualization have limitations because existing methods require a controlled environment with expensive and sophisticated setups. This is not possible to implement in a routine hospital setup for example. They also require a number of parameters for calculation of aerosol trajectories and provide no information on the contamination level of surfaces.

SUMMARY OF THE INVENTION

The invention is defined by the claims.

According to examples in accordance with an aspect of the invention, there is provided a system for detecting surface contamination, comprising:

   a set of one or more cameras for monitoring a volume to be monitored; and
   a processor for analyzing the camera images, thereby to:

      identify the presence of one or more people in the volume;
      identify sneezing or coughing of the identified people;
      determine an orientation of the face of a person during the sneezing or coughing;
      estimate a trajectory of particles during sneezing or coughing using the determined orientation;
      determine a distance between the face of the person and structures in the volume, during the sneezing or coughing; and
      determine a level of contamination of the structures.

The system uses a set of (one or more) cameras to detect and record sneezing or coughing.

Coughing or sneezing can be detected based on their typical patterns. Coughing usually begins with a deep inspiration followed by a forced expiration against a closed glottis. A typical sneeze is associated with a build-up leading to wide opening of a mouth with extended neck, this is followed by a sudden and powerful release of air and bio-particles from the nose and mouth. Based on a large database of image sequences of people coughing and sneezing it is possible to develop an image (video) processing algorithm to detect such patterns. For example, machine learning may be used to enable detection of coughing and sneezing.

Based on analysis of the images (and optionally also sound), coughing or sneezing are thereby detected, and computational models may be used to track aerosol trajectories using input parameters derived from the camera images. The overall contamination of a surface can then be determined based on exposure of the surface to sneeze or cough particles. The system may optionally also take account of a likely infectivity of an individual. The level of contamination may for example then be represented graphically on a display.

The system may use visible light cameras but thermal cameras (infra-red range) or other appropriate cameras and sensors may be used.

The processor may be adapted to generate an output indicating one or both of:

a contamination grade for the structure;
a recommended time and/or method for decontamination of the structure.

This is for example based on a total surface contamination. The grades are for example mild, moderate and high (i.e. three grades) but there could be more grades, or indeed there may be only two (needs disinfecting or not).

The processor may be adapted to generate a modified version of an image from at least one of the cameras to represent a level of surface contamination of the structures shown in the image. This may be a digital map or overlay.

The processor may be further adapted to detect parameters of a person who is sneezing or coughing such as approximate age, sex, height and mouth geometry information. These parameters may be used to estimate the force and velocities likely to result when the person coughs or sneezes as well as directional information.

For example, camera images may be used to measure angle of the nose and mouth with respect to the floor, roof and other nearby structures in the room before, during and after an act of coughing or sneezing. The age, sex and height may be used to estimate a likely force or velocity of sneezing or coughing.

The processor may be further adapted to derive an estimate of discharge velocity from the parameters.

The processor is for example further adapted to receive air flow parameters relating to the volume. These may influence how far the trajectory travels towards surfaces. The air flow parameters for example comprise one or more of air currents, ambient temperature and humidity.

The processor may further be adapted to detect covering of the nose and mouth during an identified sneezing or coughing. Covering the nose and mouth during coughing or sneezing is recommended practice, as it significantly reduces number of droplets released to the external environment. The camera based system can also be used to detect whether the nose or mouth was covered or not during a particular episode of coughing or sneezing and to estimate the uncovered area of the nose or mouth. Similarly, the use of face mask can also be detected using the camera-based system.

The processor may be adapted to determine the level of contamination based on a distance from the face of an identified person during the sneezing or coughing and the structures in the volume. The processor may be adapted to determine the level of contamination additionally based on an estimated peak average velocity along a cough or sneeze central axis.

The processor may further be adapted to detect infectivity of an identified person based on physiological signs or signal obtained from the camera images. The physiological signs for example comprise one or more of body temperature, respiratory rate, breathing pattern, oxygen saturation, coughing or sneezing frequency and sound or their combination.

The invention also provides a method for detecting surface contamination, comprising:

receiving camera images which monitor a volume from a set of cameras; and
analyzing the camera images, thereby to:

identify the presence of one or more people in the volume;
identify sneezing or coughing of the identified people;
determine an orientation of the face of a person during the sneezing or coughing;
estimate a trajectory of particles during the sneezing or coughing;
determine a distance between the face of the person and structures in the room during sneezing or coughing; and
determine a level of contamination of the structures.

The method may include detecting parameters of a person who is sneezing or coughing such as approximate age, sex, height and mouth geometry information, thereby to derive discharge velocity information.

The level of contamination is for example determined based on distance from the face of an identified person during sneezing or coughing and the structures in the volume and optionally additionally based on an estimated peak average velocity along a cough or sneeze central axis.

The invention also provides a computer program comprising computer program code which is adapted, when said program is run on a computer, to implement the method defined above.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 shows a system for detecting surface contamination;
Figure 2 shows a method of determining the particle trajectory from coughing or sneezing;
Figure 3 shows how the contamination level is obtained after the trajectory has been estimated; and
Figure 4 shows a method of setting an infectivity level for an individual in the volume.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides system for detecting surface contamination. A set of (one or more) cameras monitors a volume and the camera images are processed to identify the presence of one or more people in the volume and identify sneezing or coughing of the identified people. An orientation of the face of a person during the sneezing or coughing is determined so that a trajectory of particles during sneezing or coughing can be estimated. A distance between the face of the person and structures in the volume is also determined during the sneezing or coughing and a level of contamination of the structures can then be derived.

The system thus uses computational models to track the trajectory of aerosols using inputs parameters derived from camera images. The overall contamination of a surface can then be categorized based on exposure of the surface to sneeze or cough particles and optionally also the likely infectivity of an individual. There may optionally also be sensors to monitor ambient temperature, humidity, and air currents.

There may be multiple cameras for better tracking of particles. The cameras for example use visible light detection but thermal cameras (infra-red range) may instead be used or indeed other appropriate cameras and sensors.

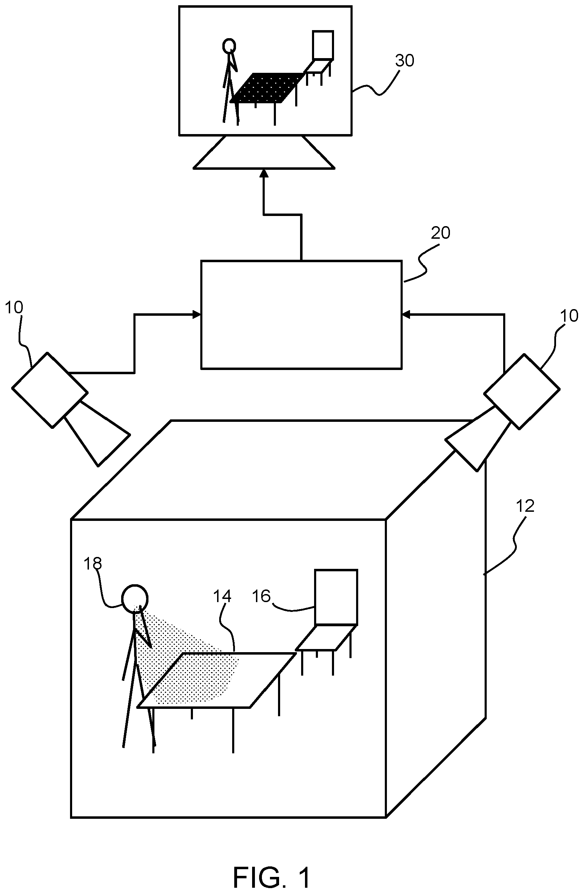

Figure 1 shows a system for detecting surface contamination, comprising a set of one or more cameras 10 for monitoring a volume 12 to be monitored. In the example shown the volume is a room such as a hospital room or ward, and there are two cameras in the set. There may however be a single camera or more than two.

The volume contains structures having surfaces which can become contaminated, such as a table 14 and chair 16. A person 18 is shown sneezing in the room.

A processor 20 is provided for analyzing the camera images. It identifies the presence of one or more people in the volume, and identifies sneezing or coughing of the identified people.

The image processing determines a trajectory of sneezing or coughing particles. To do this, it determines an orientation of the face of a person during the sneezing or coughing and thereby estimates a trajectory. By additionally taking account of the distance between the face of the person and structures in the volume, during the sneezing or coughing, a level of contamination of the structures can be obtained.

Figure 1 also shows a display 30 which provides an image of the volume and the structures within the volume. It may simply be an image from one of the cameras, or it may be an image obtained by combining camera images. It uses an overlay or digital map to illustrate the levels of contamination. For example, the table surface is highlighted to illustrate a high level of contamination.

The cameras are for example placed at important locations inside the volume so as to cover all the areas where there are structure inside the volume (e.g. room). The cameras continuously monitor individuals in the field of vision to detect any act of coughing or sneezing.

Coughing and sneezing are associated with the release of a large number of airborne particles in the form of jets; these particles could be source of infections for others. Therefore, it is important to track these particles to find out surfaces likely to be contaminated by them.

The determination of surface contamination first involves determining particle trajectories, and then determining if structures (objects or surfaces of objects) are in the path and range of such particles.

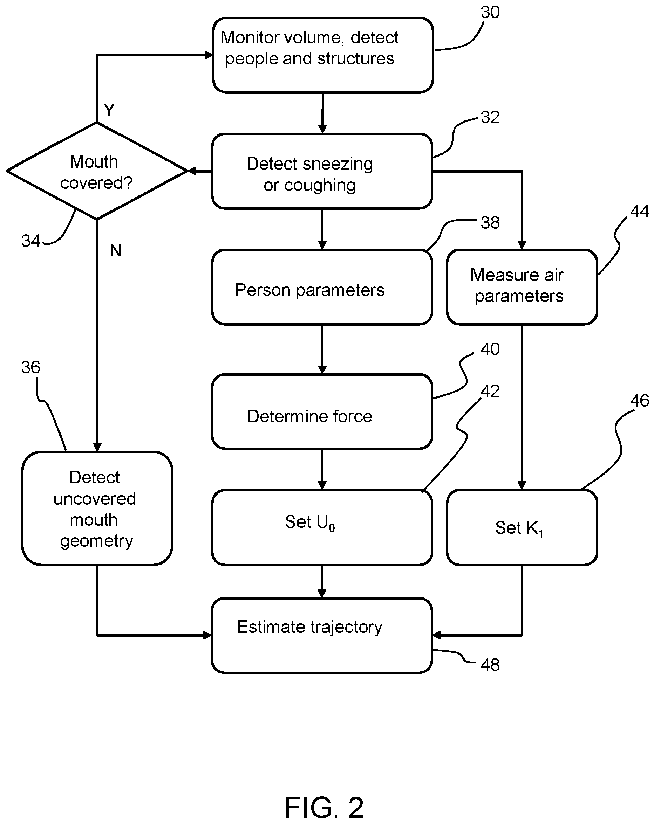

Figure 2 shows a method of determining the particle trajectory from coughing or sneezing.

In step 30, the volume is monitored using the set of cameras.

In step 32, coughing or sneezing are detected.

Coughing or sneezing can for example be detected based on their typical patterns. As mentioned above, coughing is usually initiated by irritation of the lining of the trachea or bronchi. It begins with a deep inspiration followed by a forced expiration against a closed glottis. A typical sneeze is associated with build-up leading to wide opening of a mouth with extended neck. These motions can be detected based on the analysis of the camera images. In particular, based on a large database of coughing and sneezing events, it is possible to develop an image processing algorithm to detect such patterns.

In step 34, it is detected if the nose and mouth are covered. Covering the nose and mouth during coughing or sneezing is recommended practice, as it significantly reduces number of droplets released in external environment. The camera based system can thus also be used to detect whether the nose or mouth was covered or not during a particular episode of coughing or sneezing.

If the nose and mouth are covered, the trajectory analysis is not needed, and the method returns to the monitoring step for the next sneeze or cough event. Similarly, the use of face mask can also be detected using the camera-based system.

If the nose and mouth are not fully covered, the image analysis can be used to estimate the uncovered area of the nose and mouth. This is shown as step 36.

Although both coughing and sneezing are sudden expulsions of air and respiratory tract fluid, studies have shown that they have different characteristics. The peak velocity of droplets expelled during a sneeze is significantly higher than that generated during cough and the number of droplets expelled during a sneeze are also much higher than those produced during coughing. Based on numerical and experimental studies, computation models can be developed to track the trajectory of a cough and sneeze jet as separate flow types. However, such models need a number of physical parameters for calculation of the aerosol trajectory. The invention enables camera images to be used to derive these parameters as explained below.

The characteristics of a cough jet are strongly related to volume flow rate and duration of the cough besides the other parameters such as discharge velocity and inlet geometry of mouth of a person.

The penetration distance Sp, refers to the distance from the mouth to the frontal tip of cough jet, and it can be expressed by Equation (1):

$$Sp = f(U_0, D, \tau) \qquad \dots (1)$$

where Uo is the discharge velocity, $\tau$ is time, and D is the diameter of the jet source.

The volume flow rate of the jet is given by $\dfrac{\tau U_0 D^2}{4}$ .

The discharge velocity $U_0$ varies from person to person, based on the force of sneezing or coughing. It has been observed that that male and female have different average initial cough velocities and peak flow rates.

The camera images can thus be used to determine an individual's age, sex, and force used during sneezing or coughing (e. g., by analyzing chest, head, and body movements). The camera images can be also used to calculate an approximate height of the person. This is shown in Figure 2 as the collection of person parameters in step 38 and then the determination of a force in step 40.

Using these parameters, it is possible to derive an appropriate value of Uo in step 42 based on either a historical database or algorithms (e.g. linear regression) for a given individual.

The diameter of the jet source D is determined by image analysis based on the geometry of the mouth of a person (e.g., dimensions of uncovered portion of the mouth or nose during a cough or sneeze) in step 36, mentioned above. Factors such as the use of a face mask, covering of mouth and nose with a cloth or hands impacts the geometry of mouth. All these factors are detected using the camera images and an appropriate value of D is calculated in step 36, for the cases where the mouth and nose are not fully covered.

Similarly, the total duration of the cough can be also estimated using camera images.

Thus, based on information from camera the images, suitable values of Uo, $\tau$ and D can be selected by the processor (based on a database of suitable values for different categories) to put in the equation to derive more accurate results.

Alternatively, algorithms trained on a large dataset of cough and sneeze activities can be used to select appropriate values of Uo, and D based on individual parameters such as age, sex, height, geometry of mouth and force of coughing and sneezing etc. derived from camera images in steps 36, 38 and 40.

For a given discharge velocity Uo, relationship of the cough jet can be written as:

$$\frac{\text{Sp} - \text{x}_0}{\text{D}} \sim (\text{U}_0 \tau / \text{D})^n \qquad \qquad \dots (2)$$

where $x_0$ is the origin (position of mouth or nose in the give space). The power n reflects the relationship between penetration distance with time.

The position of mouth or nose in the space ($x_0$) is obtained by the camera images.

After taking the derivative of the penetration distance Sp, with respect to time, $\tau$, Equation 2 can be written as:

$$\frac{\text{U}_{om}}{\text{U}_0} = \text{K}_1 \left( \frac{\text{Sp} - \text{x}_0}{\text{D}} \right)^{-1} \qquad \qquad \dots (3)$$

Where, $U_{om}$ is the maximum centerline velocity at the jet tip with a penetration distance of Sp. $U_{om}$ can also refer to the peak average velocity at the cough jet center following the tip. The cough jet center is defined as a location of maximum velocity.

The coefficient $K_1$ is a constant value that can be determined via experiments for a particular room considering other factors such as air current in room, ambient temperature, humidity etc. collected by sensors. Alternatively, an empirical value of Ki can be used for calculation.

Figure 2 shows that air parameters may be measured in step 44 to then set the value of Ki in step 46 so that a more accurate measure of penetration distance can be obtained.

It is observed that the axial velocity profile through a puff center follows a Gaussian function similar to a steady jet described in equations. This information can be thus used to determine velocity field of the cough jet.

Once the velocity field is determined, the trajectory of a particle injected with a cough jet can be then obtained in step 48 according to Newton's second law of momentum conservation by using the particle momentum and displacement equations as follows,

$$\frac{d \vec{U}_p}{d \tau} = \frac{3 C_d \rho_a}{8 \rho_p r_p} | \vec{U}_a - \vec{U}_p | \left( \vec{U}_a - \vec{U}_p \right)$$

$$+ \vec{g} \left( 1 - \frac{\rho_a}{\rho_p} \right),$$

$$\frac{d \vec{X}_p}{d \tau} = \vec{U}_p,$$

In the above equation the subscripts, p and a, represent particle phase and air phase (obtained from an air current, ambient temperature and humidity sensor), respectively. Cd is the drag coefficient represented by a general function of particle.

The information from the above equation can be finally used to estimate the trajectories of aerosols from a cough or sneeze.

Another approach could be use of simple empirical models based on the aerodynamic relationship between the movement of the airflow and fine particles. For example, one study has proposed an approximate functional relationship between elapsed time and velocity of front-line particles of sneezing and cough using the vector analysis of the experimental data. In this respect, reference is made to H. Nishimura, S. Sakata, and A. Kaga, "A New Methodology for Studying Dynamics of Aerosol Particles in Sneeze and Cough Using a Digital High-Vision, High-Speed Video System and Vector Analyses," PLOS ONE, vol. 8, no. 11, p. e80244, Nov. 2013.

Based on this method, the approximate equation describing the advancement of the front line of the sneeze (I), can be give as:

$$Vh = 1500 \exp(-22t)$$

where Vh represents the horizontal velocity (cm/s) of particles at the distal end of the sneeze mist mass and t (s) is the time after the release from the mouth. This equation thus can be used to calculate the direct reach of the sneeze.

To summarize, based on camera images, individual parameters such as position of a person, age, sex, geometry of the mouth and the force of a cough or sneeze etc. are determined. This information in then used to estimate number of physical parameters required for computational models. These parameters are then provided to the computational models to estimate the trajectory of the cough or sneeze particles.

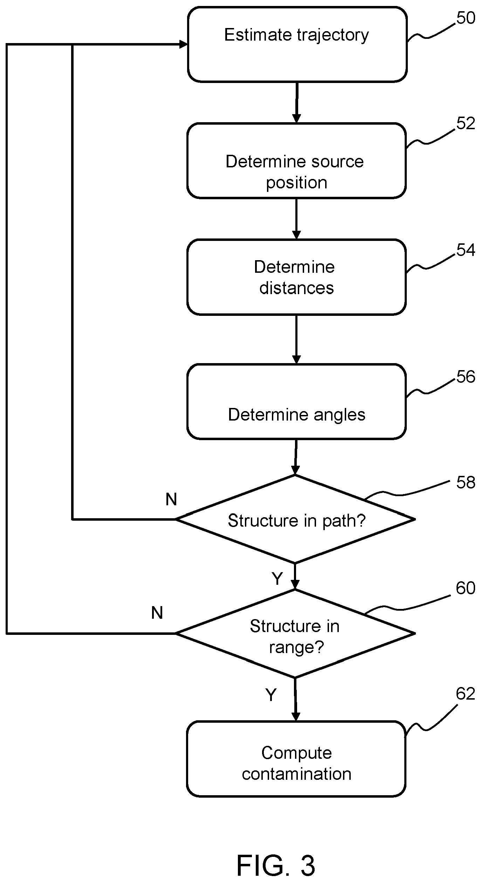

Figure 3 shows how the contamination level is obtained after the trajectory has been estimated.

Step 50 represents the method of Figure 2, by which the particle trajectory is obtained.

Different objects in the vicinity of the source of the cough or sneeze are likely to be contaminated differently with the aerosol; therefore, it is necessary to determine the level of contamination of the objects. The camera images are used to detect the nearby objects and the aerosol trajectory information from the computation models is then used to determine contamination level of different objects.

By using the position of camera as a reference point, the position of an individual during coughing or sneezing in the given space ($x_0$) is determined in step 52.

Based on this determined position, the distance and angles of all nearby objects such as walls, doors, windows, railings, furniture, and other individuals are also determined by using camera images, in steps 54 (distances) and 56 (angles).

The camera images are used to measure the angle of the nose and mouth with respect to the floor, roof and other nearby structures in the room before, during, and after an act of coughing or sneezing. The camera images are also used to measure the distance of the source of coughing or sneezing (mouth or nose) from the nearby structures in the room before, during and after an act of coughing or sneezing.

Based on the trajectory information, objects likely to be in the path of cough or sneeze aerosols are determined in steps 58 and 60, where step 58 compares the object with the aerosol path direction and step 60 compares the object location with the aerosol range.

Only the nearby objects in the path of aerosol, within the penetration distance (Sp) from $x_0$ are likely to be contaminated with the aerosols. Thus, step 60 only requires objects within range to have a graded contamination level. Thus, the level of contamination of an object is based on its distance from the source $x_0$ and the peak average velocity at the cough jet center ($U_{om}$). The objects which are near to $x_0$ are likely to be more contaminated with aerosols; similarly, the level of contamination will be more in case of a higher value $U_{om}$.

Therefore, based on these two parameters, all the nearby contaminated objects can be classified in step 62 into different grades of contamination (e.g., mild contamination; moderate contamination; high contamination).

Alternatively, a simpler approach can be used for classification of the contaminated surface. Objects with predefined distances from the source $x_0$ could be graded into different levels of contamination (e.g., within less than one meter from $x_0$ = mild contamination; 1 to 3 meters = moderate contamination; > 3 meters high contamination).

Not every person who coughs or sneezes is likely to be suffering from an infectious disease. Therefore, an additional option is to identify the individual who are more likely to have infectious disease so that an extra care can be taken in such cases. The camera images may be used in this case to determine infectivity level of an individual.

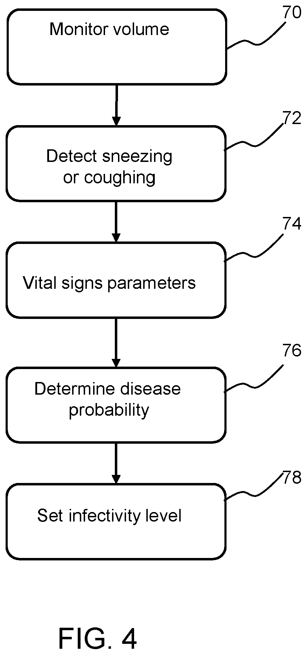

Figure 4 shows a method of setting an infectivity level for an individual in the volume.

The volume is monitored in step 70 and coughing and sneezing are detected in step 72 as explained above.

It is known from the literature that physiological parameters of an individual such as body temperature, respiratory rate, breathing pattern, oxygen saturation, cough or sneeze frequency and sound or their combination can be used to identify individuals with a certain disease. Camera images and video have been used in the past to obtain such parameters for screening purposes.

Physiological parameters of the individual are in this way obtained in step 74 from the camera images. These parameters are then used estimate probability of a certain disease condition in step 76 using available algorithms or models.

Based on a probability of having a certain disease and the infectivity and severity associated with such diseases, an individual can be graded into different categories of infectivity in step 78, such as low infectivity; moderate infectivity; high infectivity. An algorithm or combinations of algorithms trained on different disease conditions can be used for such purpose.

For every episode of a cough or sneeze, the area or surface contaminated by it is determined as described above. Surfaces are also graded based on a level of contamination. Similarly, the infectivity level of each individual is also determined as explained above. All of these parameters can then be stored with time information for each cough or sneeze episode. By combining a level of surface contamination and infectivity of the associated individual, each surface can be further marked into different zones from the risk of disease transmission perspective. This information then can be used to generate appropriate notifications or alarms.

As shown and explained briefly with reference to Figure 1, this information then can be overlaid on the camera feed to indicate a contagious level of the different surfaces or objects within the camera feed for the different time periods.

Using feeds from different cameras, a three dimensional map can be created of the entire room and the objects within. The overall contamination information then can be overlaid on this map to indicate contaminated area using augmented reality gadgets. This will enable easy visualization of all the contaminated surface so that they can be cleaned selectively and adequately.

The information of contaminated surfaces can be also used for real-time monitoring of a public space. If a particular area or surface is contaminated, this can be indicated to the individuals in the room using audio or visual means to prevent contact with a contaminated surface. One way of implementing this could be different colors of lighting to indicate level of contamination of a particular surface. This can be also used to corner of some of the area in the room.

The camera images could be also used to detect when a particular surface has been cleaned or disinfected. This information along with contamination information can be then used to indicate an appropriate priority or time for cleaning different areas or surfaces. This information can be also used to initiate auto disinfection with recommended methods (Ultra Violet light or Fumigation) based on an alert level when no individuals are present in the area or following a pre-determined schedule.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

A computer program may be stored or distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

**Claims**

1. A system for detecting surface contamination, comprising:

   a set of one or more cameras (10) for monitoring a volume to be monitored; and
   a processor (20) for analyzing the camera images, thereby to:

      identify the presence of one or more people in the volume;
      identify sneezing or coughing of the identified people;
      determine an orientation of the face of a person during the sneezing or coughing;
      estimate a trajectory of particles during sneezing or coughing using the determined orientation;
      determine a distance between the face of the person and structures in the volume, during the sneezing or coughing; and
      determine a level of contamination of the structures.

2. The system of claim 1, wherein the processor (20) is adapted to generate an output indicating one or both of:

      a contamination grade for the structure;
      a recommended time and/or method for decontamination of the structure.

3. The system of claim 1 or 2, wherein the processor (20) is adapted to generate a modified version of an image from at least one of the cameras to represent a level of surface contamination of the structures shown in the image.

4. The system of any one of claims 1 to 3, wherein the processor (20) is further adapted to detect parameters of a person who is sneezing or coughing such as approximate age, sex, height and mouth geometry information.

5. The system of claim 4, wherein the processor (20) is further adapted to derive an estimate of discharge velocity (Uo) from the parameters.

6. The system of any one of claims 1 to 5, wherein the processor (20) is further adapted to receive air flow parameters relating to the volume.

7. The system of any one of claims 1 to 6, wherein the processor (20) is further adapted to detect covering of the nose and mouth during an identified sneezing or coughing.

8. The system of any one of claims 1 to 7, wherein the processor (20) is adapted to determine the level of contamination based on a distance from the face of an identified person during the sneezing or coughing and the structures in the volume.

9. The system of claim 8, wherein the processor (20) is adapted to determine the level of contamination additionally based on an estimated peak average velocity along a cough or sneeze central axis.

10. The system of any one of claims 1 to 9, wherein the processor (20) is further adapted to detect infectivity of an identified person based on physiological signs obtained from the camera images.

11. The system of claim 10, wherein the physiological signs comprise one or more of: body temperature, respiratory rate, breathing pattern, oxygen saturation, coughing or sneezing frequency; and sound or their combination.

12. A method for detecting surface contamination, comprising:

   (30) receiving camera images which monitor a volume from a set of cameras; and
   analyzing the camera images, thereby to:

      (30) identify the presence of one or more people in the volume;
      (32) identify sneezing or coughing of the identified people;
      (38) determine an orientation of the face of a person during the sneezing or coughing;
      (48) estimate a trajectory of particles during the sneezing or coughing;
      (54) determine a distance between the face of the person and structures in the room during sneezing or coughing; and
      (62) determine a level of contamination of the structures.

13. The method of claim 12, comprising detecting parameters of a person who is sneezing or coughing such as approximate age, sex, height and mouth geometry information, thereby to derive discharge velocity information.

14. The method of claim 12 or 13, comprising determining the level of contamination based on distance from the face of an identified person during sneezing or coughing and the structures in the volume and optionally additionally based on an estimated peak average velocity along a cough or sneeze central axis.

15. A computer program comprising computer program code which is adapted, when said program is run on a computer, to implement the method of any one of claims 12 to 14.

FIG. 1

FIG. 2

FIG. 3

```
┌─────────────────────────┐
│                         │      70
│     Monitor volume      │  ⟋
│                         │
└─────────────────────────┘
             │
             ▼
┌─────────────────────────┐
│                         │      72
│    Detect sneezing      │  ⟋
│      or coughing        │
└─────────────────────────┘
             │
             ▼
┌─────────────────────────┐
│                         │      74
│   Vital signs parameters│  ⟋
│                         │
└─────────────────────────┘
             │
             ▼
┌─────────────────────────┐
│                         │      76
│   Determine disease     │  ⟋
│      probability        │
└─────────────────────────┘
             │
             ▼
┌─────────────────────────┐
│                         │      78
│    Set infectivity level│  ⟋
│                         │
└─────────────────────────┘
```

# FIG. 4

Europäisches
Patentamt

European
Patent Office

Office européen
des brevets

# EUROPEAN SEARCH REPORT

Application Number

EP 21 21 2718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 034 857 A (UNIV BEIJING INF SCI & TECH) 4 December 2020 (2020-12-04) | 1,2,12, 15 | INV. G06V40/20 |
| Y | * the whole document * | 3-11,13, 14 | G06V20/52 |
| Y | US 2021/150874 A1 (TURANO MARK [US] ET AL) 20 May 2021 (2021-05-20) * paragraphs [0034] – [0070] * | 3,8,9,14 | |
| Y | US 2013/130227 A1 (PELTZ LEORA [US] ET AL) 23 May 2013 (2013-05-23) * paragraphs [0030] – [0081] * | 10,11 | |
| Y,D | NISHIMURA HIDEKAZU ET AL: "A New Methodology for Studying Dynamics of Aerosol Particles in Sneeze and Cough Using a Digital High-Vision, High-Speed Video System and Vector Analyses", PLOS ONE, vol. 8, no. 11, 27 November 2013 (2013-11-27), page e80244, XP055921384, DOI: 10.1371/journal.pone.0080244 * the whole document * | 4-7,13 | |

TECHNICAL FIELDS SEARCHED (IPC)

G06V
G16H
A61L

The present search report has been drawn up for all claims

| Place of search | Date of completion of the search | Examiner |
|---|---|---|
| The Hague | 17 May 2022 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                    
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 21 2718

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2022

| Patent document cited in search report | | Publication date | Patent family member(s) | | Publication date |
|---|---|---|---|---|---|
| CN 112034857 | A | 04-12-2020 | NONE | | |
| US 2021150874 | A1 | 20-05-2021 | NONE | | |
| US 2013130227 | A1 | 23-05-2013 | US | 2013130227 A1 | 23-05-2013 |
| | | | US | 2015125937 A1 | 07-05-2015 |
| | | | WO | 2013077923 A1 | 30-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. NISHIMURA ; S. SAKATA ; A. KAGA.** A New Methodology for Studying Dynamics of Aerosol Particles in Sneeze and Cough Using a Digital High-Vision, High-Speed Video System and Vector Analyses. *PLOS ONE,* November 2013, vol. 8 (11), e80244